# EUROPEAN PATENT APPLICATION

(11) **EP 1 624 554 A1**
(43) Date of publication of application: **08.02.2006**
(21) Application number: 05015343.6
(22) Date of filing: 14.07.2005
(51) Int. Cl.: H02K 21/24, H02K 1/27, H02K 16/04

(54) **Rotating electric machine**

(30) Priority: 02.08.2004 JP 2004225471
(71) Applicant: NISSAN MOTOR CO., LTD., Yokohama-shi, Kanagawa 221-0023 (JP)
(72) Inventor: Nakayama, Hiroyuki, Yokosuka-shi Kanagawa 238-0023 (JP); Minagawa, Yuusuke, Yokosuka-shi Kanagawa 237-0063 (JP)
(74) Representative: Grünecker, Kinkeldey, Stockmair & Schwanhäusser Anwaltssozietät

(57) **Abstract**

In an axial gap type rotating electric machine, a rotor (23) is arranged in an axial direction of the rotating electric machine and includes a plurality of permanent magnets magnetized in a circumferential direction of the rotating electric machine with respect to a revolution axis thereof and magnetized in a radial direction thereof with respect to the revolution axis thereof and a stator (25) is arranged in the axial direction thereof and includes a plurality of stator elements (24-1, 24-2), each stator element being constituted by a stator coil (33) and a stator tooth (34) and being opposed against the rotor via an axial gap provided in the axial direction thereof and the stator further including other stator elements (24-3) arranged to be opposed against at least one of an outer circumferential portion of the rotor in the radial direction and an inner circumferential portion thereof in the radial direction.

## Description

### BACKGROUND OF THE INVENTION:

### Field of the invention

The present invention relates to a structure of an axial gap type rotating electric machine in which a rotor having a plurality of buried permanent magnets and stator elements of a stator having stator coils and stator teeth are arranged in an axial direction of the rotating electric machine.

### Description of the related art

A Japanese Patent Application First Publication No. 2003-88032 published on March 20, 2003 (which corresponds to a United States Patent No. 6,774,527 issued on August 10, 2004) exemplifies a previously proposed axial gap type rotating electric machine in which at least one rotor and at least one stator element are arranged in an axial direction. In the previously proposed axial gap type rotating electric machine, the rotor is provided with a rotor core in a circumferential direction of which a plurality of sector shaped permanent magnets are arranged. Each permanent magnet is magnetized in parallel to a direction of a revolution axis of the rotating electric machine and a magnetized direction of each of mutually adjacent permanent magnets is alternately opposed.

### SUMMARY OF THE INVENTION:

In the above-described previously proposed axial gap type rotating electric machine, the rotor is magnetized in the direction of the revolution axis. Hence, a magnet torque is reduced when a reluctance torque is tried to be raised. Thus, as a total, a torque as the rotating electric machine is accordingly reduced.

It is, therefore, an object of the present invention to provide an axial gap type rotating electric machine which is capable of improving a rotor core utilization rate, is capable of increasing a reluctance torque, and is capable of increasing a total torque of the magnet torque and the reluctance torque even when the reluctance torque is raised.

According to one aspect of the present invention, there is provided a rotating electric machine, comprising: a rotor arranged in an axial direction of the rotating electric machine and including a plurality of permanent magnets magnetized in a circumferential direction of the rotating electric machine with respect to a revolution axis thereof and magnetized in a radial direction of the rotating electric machine with respect to the revolution axis thereof; and a stator arranged in the axial direction of the rotating electric machine and including a plurality of stator elements, each stator element being constituted by a stator coil and a stator tooth and being opposed against the rotor via an axial gap provided in the axial direction of the rotating electric machine, the stator further including other stator elements arranged to be opposed against at least one of an outer circumferential portion of the rotor in the radial direction and an inner circumferential portion thereof in the radial direction.

According to another aspect of the present invention, there is provided a method applicable to a rotating electric machine comprising: providing a rotor arranged in an axial direction of the rotating electric machine and including a plurality of permanent magnets magnetized in a circumferential direction of the rotating electric machine with respect to a revolution axis thereof and magnetized in a radial direction of the rotating electric machine with respect to the revolution axis thereof; and providing a stator arranged in the axial direction of the rotating electric machine and including a plurality of stator elements, each stator element being constituted by a stator coil and a stator tooth and being opposed against the rotor via an axial gap provided in the axial direction of the rotating electric machine, the stator further including other stator elements arranged to be opposed against at least one of an outer circumferential portion of the rotor in the radial direction and an inner circumferential portion thereof in the radial direction.

According to the present invention, the rotating electric machine is provided with the rotor including a plurality of permanent magnets magnetized in a radial direction with respect to a revolution axis of the rotating electric machine and in the circumference direction with respect to the revolution axis thereof. Thus, the rotor core utilization rate can be utilized. The reluctance torque can be increased. In addition, other stator elements than the stator elements arranged in the axial direction are installed in at least one of the inner and outer circumferential portions of the rotor. Thus, the torque can be increased. This summary of the invention does not necessarily describe all necessary features so that the invention may also be a sub-combination of these described features.

### BRIEF DESCRIPTION OF THE DRAWINGS:

Fig. 1 is explanatory view for explaining a basic example of an axial gap type rotating electric machine according to the present invention.

Figs. 2A and 2B are explanatory views for explaining a first preferred embodiment of the axial gap type rotating electric machine according to the present invention.

Fig. 3 is an explanatory perspective view of each triangular shaped cross sectioned space defined by three permanent magnets within a rotor core in the first embodiment shown in Figs. 2A and 2B.

Figs. 4A and 4B are explanatory views for explaining a second preferred embodiment of the axial gap type rotating electric machine according to the present invention.

Figs. 5A and 5B are explanatory views for explaining a third preferred embodiment of the axial gap type rotating electric machine according to the present invention

Figs. 6A and 6B are explanatory views for explaining a fourth preferred embodiment of the axial gap type rotating electric machine according to the present invention.

### DETAILED DESCRIPTION OF THE PREFERRED EMBODIMENTS:

Reference will hereinafter be made to the drawings in order to facilitate a better understanding of the present invention.

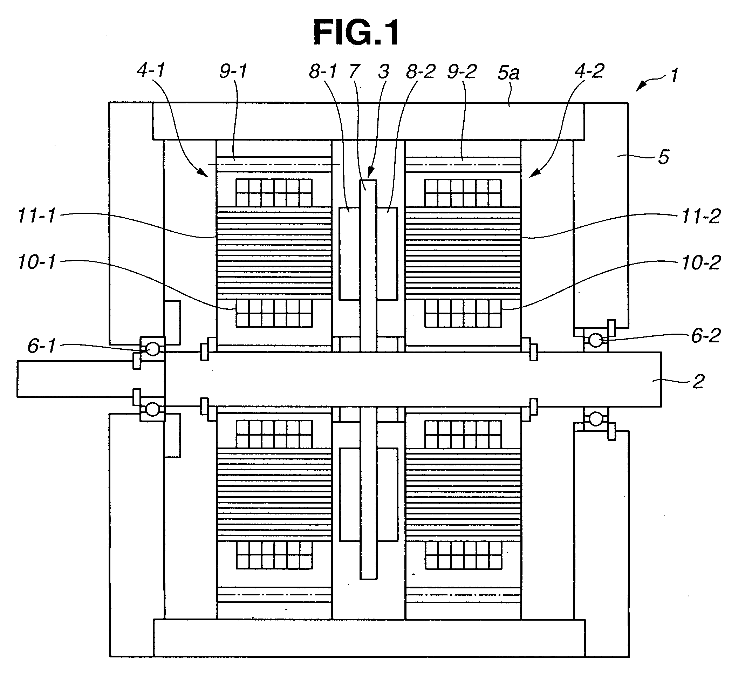

Fig. 1 shows a basic example of an axial gap rotating electric machine according to the present invention. In Fig. 1, an axial gap type rotating electric machine 1 is constituted by a rotor axle 2 which serves as a revolution axis (axle) of rotating electric machine 1, a disc-shaped rotor 3 fixed on rotor axle 2 and two rotors 4-1, 4-2 installed so as to be opposed against rotor 3. Rotor 3 and two stators 4-1, 4-2 are housed in a housing 5. In this example, rotor axle 2 is rotatably attached onto housing 5 via bearings 6-1, 6-2. In addition, rotor 3 is constituted by a rotor core 7 and permanent magnets 8-1, 8-2 installed on both sides of rotor core 7. Furthermore, respective stators 4-1, 4-2 are constituted by stator teeth 11-1, 11-2 on which coils 10-1, 10-2 are, respectively, wound are arranged at equal intervals and cylindrically within stator cores 9-1, 9-2 in cylindrical shapes.

Features of the axial gap type rotating electric machine according to the present invention are such that, in the axial gap type rotating electric machine, the structure of rotor 3 is modified, the structure of each stator 4-1, 4-2 is modified, permanent magnets magnetized in the circumferential direction with respect to a revolution axis of rotating electric machine 1 and permanent magnets magnetized in the radial direction with respect to the revolution axis of rotating electric machine 1 are installed (buried) within rotor 3 and other stator elements than those arranged in the axial direction of rotating electric machine 1 are installed on at least one of inner and outer circumferential portions of rotor 3. Hence, these modified items will be described below.

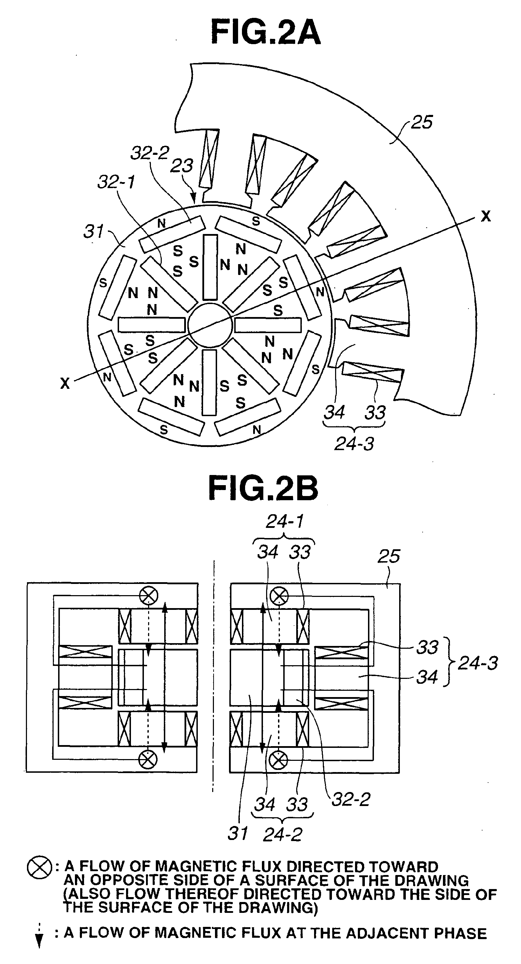

Figs. 2A and 2B show a first preferred embodiment of the axial gap type rotating electric machine. Fig. 2A is a partially laterally cross sectioned view of rotor and added stator elements for explaining the modifications of the rotor and stator in the first embodiment of the axial gap type rotating electric machine. Fig. 2B is a longitudinally cross sectioned view cut away along a line of X - X shown in Fig. 2A. As shown in Figs. 2A and 2B, axial gap type rotating electric machine 21 according to the present invention includes: a disc-shaped rotor 23 fixed on a rotor shaft (not shown in Figs. 2A and 2B); first stator elements 24-1 and second stator elements 24-2 opposed against rotor 23 in the axial direction with respect to the revolution axis of rotating electric machine 21; and third stator elements 24-3 disposed so as to oppose against the outer circumferential portion of rotor 23 in a radial direction of the rotating electric machine. These rotor 23 and first, second, and third stator elements 24-1, 24-2, 24-3 are housed in housing 5.
It is noted that each stator element 24-1, 24-2 is integrated to a stator (back) yoke 25 and each stator element 24-1, 24-2, 24-3 includes a stator winding (stator coil) 33 and a stator tooth 34.

Rotor 23 constitutes triangular shaped cross sectioned spaces within a rotor core 31 made of a soft magnetic material. Each of the triangular shaped cross sectioned spaces is defined by at least two of permanent magnets 32-1 arranged in the radial direction of rotating electric machine and magnetized in a circumferential direction thereof with respect to the revolution axis thereof and at least one of permanent magnets 32-2 arranged in the circumferential direction thereof and located at outer circumferential portion of rotor 23. These permanent magnets 32-1, 32-2 constituting the triangular shaped cross sectioned space have the same magnetic poles (for example, N or S) faced with one another within each triangular shaped cross sectioned space, as shown in Fig. 2A. Each structure of first, second, and third stator elements 24-1, 24-2, 24-3 is the same as in the case of the previously proposed rotating electric machine. First stator elements 24-1 and second stator elements 24-2 are arranged along the circumferential direction of a surface opposed against rotor 23 and third stator elements 24-3 are arranged at a position faced against the outer circumferential surface (portion) of rotor 23 as shown in Fig. 2A. Each stator element is arranged at a predetermined interval of space and is integrated to form the stator via (back) yoke 25.

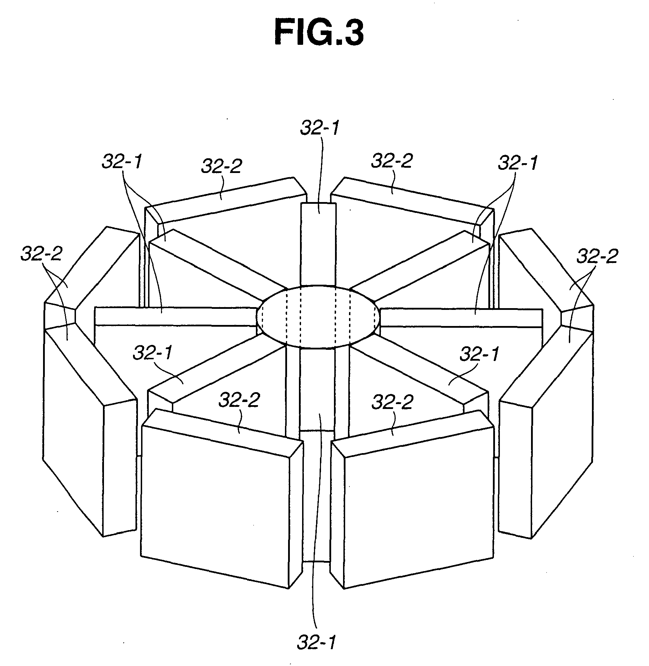

Fig. 3 shows a perspective view of rotor permanent magnets constituting the triangular shaped cross sectioned spaces (in a three-dimensional form) shown in Figs. 2A and 2B. In this embodiment, a magnetic flux loop formed by a magnetic flux flow from corresponding one 32-2 of permanent magnets through corresponding one 24-3 of third stator elements and its adjacent phase permanent magnets 32-2 as a radial gap type rotating electric machine and another magnetic flux loop formed by the magnetic flux flow through the mutually different magnetic poles enclosed by permanent magnets 32-1, 32-2 and through the corresponding one of first stator elements 24-1 or through the corresponding one of second stator elements 24-2 as the axial gap type rotating electric machine cause a magnet torque to be developed and the flow of the magnetic flux inherent to this embodiment is shown in Fig. 2B. As shown in Fig. 2B, a rotor inner side of one of permanent magnets 32-2 is enclosed by two of permanent magnets 32-1, 32-1 arranged in the radial direction and has mutually the same poles (polarity). In the case of Fig. 2B, the rotor inner space has the S pole and the magnetic flux directed from the rotor inner side toward the rotor radial direction is attracted by the corresponding one of third stator elements 24-3 by generating the magnetic flux in the same direction within corresponding stator tooth 34 by means of the power supplied corresponding coil 33. Furthermore, the flow of the magnetic flux to the adjacent phase which is the S pole enclosed by the corresponding one 32-2 of permanent magnets and corresponding two 32-1, 32-1 of permanent magnets is controlled by means of corresponding third stator elements 34-1. The phase of the N pole in the rotor inner side is controlled so that the magnetic flux flows into the adjacent phase of the N pole in the rotor inner side via corresponding first stator elements 24-1, (back) yoke 25, and the corresponding third stator elements 24-3. That is to say, the magnet torque can be increased by an increase in a magnet quantity (or a magnetic flux density).

In the rotating electric machine shown in Figs. 2A, 2B, and 3, the arrangement of permanent magnets 32-1, 32-2 in rotor 23 is modified as described above. Thus, the reluctance torque can be increased by securing an area of soft magnetic material of rotor core 31 enclosed by permanent magnets 32-1, 32-2 opposed to each of first and second stator elements 24-1, 24-2. In addition, the rotor core utilization rate can be improved. Since third stator elements 24-3 are added together with first and second stator elements 24-1, 24-2, a total torque as the whole rotating electric machine can be increased.

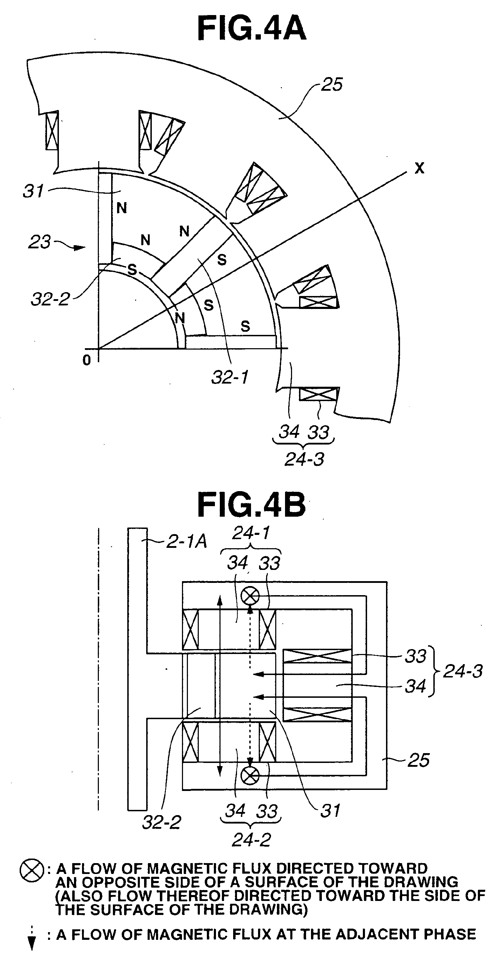

Figs. 4A and 4B show a second preferred embodiment of the axial gap type rotating electric machine. Fig. 4A is a partially longitudinal cross sectional view of the axial gap type rotating electric machine in the second embodiment. Fig. 4B is a cross sectional view cut away along a line of O -X in Fig. 4A. In this embodiment, the same reference numerals as those shown in Fig. 2A, 2B, and 3 designate the like elements and the detailed description thereof will be omitted herein.

In the embodiment shown in Figs. 4A and 4B, a difference point from the first embodiment shown in Figs. 2A, 2B, and 3 is that a letter U shaped cross sectioned space constituted by at least two 32-1 of permanent magnets arranged in the radial direction and magnetized in the circumferential direction with respect to the revolution axis and at least one 32-2 of permanent magnets arranged in the circumferential direction, located in an inner circumferential portion of rotor 23, and magnetized in the radial direction is provided with an opening faced toward an outer circumferential portion of rotor 23. The permanent magnets forming each of letter U shaped cross sectioned spaces have the same magnetic poles faced within each of the spaces, as shown in Fig. 4A.

In the second embodiment, the arrangement of permanent magnets 32-1, 32-2 is modified as described above. Hence, the utilization rate of rotor core 31 can be improved. In addition, the reluctance torque can be increased. In addition to first stator elements and second stator elements 24-1, 24-2, third stator elements 24-3 are added so as to oppose against the outer circumferential portion of rotor 23. Thus, the torque as the whole rotating electric machine can be increased.

It is noted that, although third stator elements 24-3 are installed on the outer circumferential portion of rotor 23 in the radial direction, the present invention is not limited to this. For example, third stator elements 24-3 may be installed at the inner circumferential portion of rotor 23 or, alternatively, may be installed at both of the inner and outer circumferential portions of rotor 23. In these alternative cases, the same advantages as described in the first embodiment can be obtained. It is noted that a reference numeral 2-1A denotes a rotor (hollow) revolution shaft.

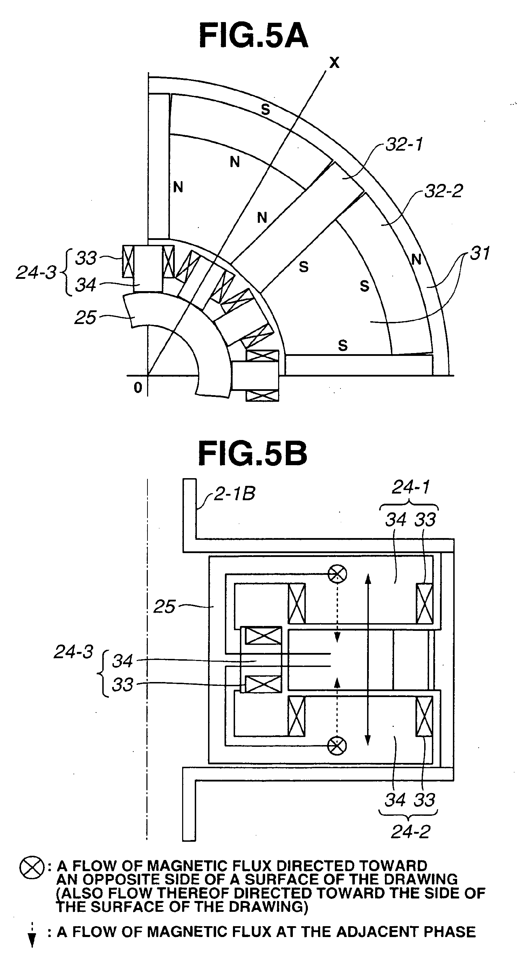

Figs. 5A and 5B show a third preferred embodiment of the axial gap type rotating electric machine according to the present invention. The difference point from the first embodiment shown in Figs. 2A, 2B, and 3 is that each letter U shaped cross sectioned space constituted by at least two 32-1 of permanent magnets arranged in the radial direction and magnetized in the circumferential direction and at least one 32-2 of permanent magnets arranged in the circumferential direction, located at the outer circumferential portion of rotor 23, and magnetized in the radial direction is formed at a regular interval of the circumferential direction of rotor 23. In this embodiment, openings of the letter U shaped cross sectioned spaces are faced toward the inner circumferential portion of rotor 23. In this embodiment, third stator elements 24-3 are installed so as to face against the inner circumferential portion of rotor 23 in the radial direction, as shown in Fig. 5B.

In the embodiment shown in Figs. 5A and 5B, the arrangement of permanent magnets 32-1, 32-2 of rotor 23 is modified as described above. Hence, the rotor core utilization rate can be increased and the reluctance torque can be increased. In addition to first and second stator elements 24-1, 24-2 arranged so as to grasp rotor 23 in the axial direction of rotating electric machine, third stator elements 24-3 are installed at the inner circumferential portion of rotor 23. Thus, the torque as the axial gap type rotating electric machine can be increased. It is noted that, in this embodiment, third stator elements 24-3 are installed so as to oppose against the inner circumferential portion of rotor 23 (refer to Fig. 5B). However, the present invention is not limited to this. For example, third stator elements 24-3 may be installed so as to oppose against the outer circumferential portion of rotor 23 or alternatively may be installed so as to oppose against both inner and outer circumferential portions of rotor 23, respectively. In these alternative cases, the same advantages as described in the case of the first embodiment can be obtained. It is noted that, in Fig. 5B, a reference numeral 2-1B denotes another type of rotor shaft connected to rotor core 31.

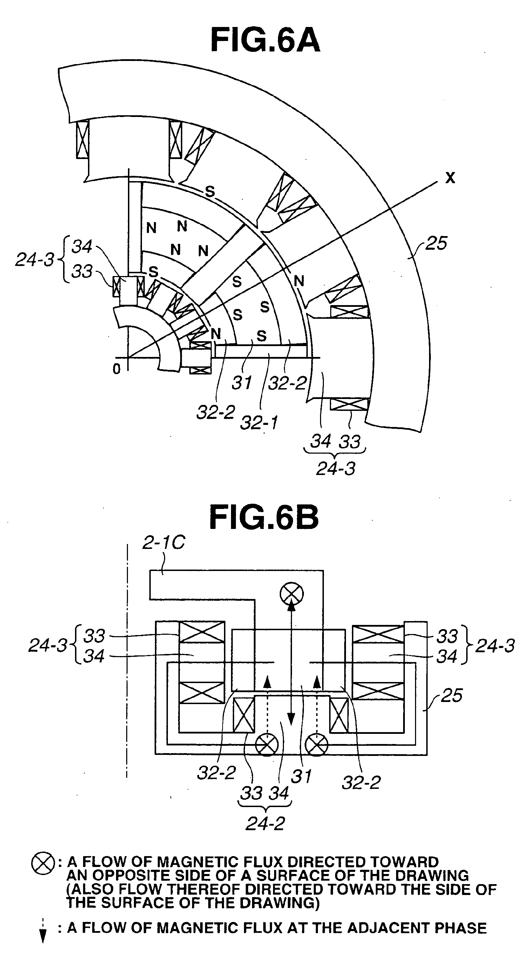

Figs. 6A and 6B show a fourth preferred embodiment of the axial gap type rotating electric machine according to the present invention. Fig. 6A shows a partially longitudinal cross sectioned view of parts of rotor and stator for explaining the structure of the fourth embodiment of the rotating electric machine according to the present invention. Fig. 6B shows a longitudinal cross sectioned view cut away along a line of O - X in Fig. 6A. In the embodiment shown in Figs. 6A and 6B, the same reference numerals as those shown in Figs. 2A and 2B designate like elements and the detailed description thereof will be omitted herein.

The difference point of this embodiment from the first embodiment shown in Figs. 2A, 2B, and 3 is that square shaped cross sectioned spaces are formed within rotor core 31 along the circumferential direction of rotor 23, each square shaped cross sectioned space being defined by at least two 32-1 of permanent magnets arranged in the radial direction and magnetized in the circumferential direction with respect to the revolution axis and at least two 32-2 of permanent magnets arranged at the inner and outer circumferential portions of rotor 23 and magnetized in the radial direction with respect to the revolution axle, the magnetic poles of permanent magnets constituting each square shaped cross sectioned space being faced toward each other, and third stator elements 24-3 are formed so as to face against the inner and outer circumferential portions of rotor 23 in the radial direction thereof. It is noted that, in this embodiment, according to the connection structure of revolution shaft 2-1C to rotor core 31, first stator elements 24-1 are omitted and, thus, second stator elements 24-2 are provided in the axial direction of rotating electric machine.

In the embodiment shown in Figs. 6A and 6B, permanent magnets 32-1, 32-2 of rotor 23 are arranged as described above. Thus, the rotor core utilization rate can be improved. The reluctance torque can be increased. In addition, since third stator elements 24-3, 24-3 are installed so as to face against inner and outer circumferential portions of rotor 23 in addition to second stator elements 24-2, the torque of the whole rotating electric machine can be increased.

It is noted that, in the embodiment shown in Figs. 6A and 6B, third stator elements 24-3 are installed so as to face against both of the inner and outer circumferential portions of rotor 23. However, the present invention is not limited to this. Third stator elements 24-3 may be installed so as to oppose against only the inner circumferential portion of rotor 23 or only the outer circumferential portion of rotor 23. In these alternative cases, the same advantages as described above can be obtained.

In axial gap type rotating electric machine according to the present invention in which at least one pair of the stator elements and the rotor is opposed to each other along the revolution axis of the rotating electric machine,.the rotor core utilization rate can be improved, the reluctance torque can be increased, and the total torque even if the reluctance torque is increased can be increased.

The entire contents of a Japanese Patent Application No. 2004-225471 (filed in Japan on August 2, 2004) are herein incorporated by reference. The scope of the invention is defined with reference to the following claims.

## Claims

1. A rotating electric machine, comprising:
a rotor (23) arranged in an axial direction of the rotating electric machine and including a plurality of permanent magnets magnetized in a circumferential direction of the rotating electric machine with respect to a revolution axis thereof and magnetized in a radial direction of the rotating electric machine with respect to the revolution axis thereof; and
a stator (25) arranged in the axial direction of the rotating electric machine and including a plurality of stator elements (24-1, 24-2), each stator element being constituted by a stator coil (33) and a stator tooth (34) and being opposed against the rotor via an axial gap provided in the axial direction of the rotating electric machine, the stator further including other stator elements (24-3) arranged to be opposed against at least one of an outer circumferential portion of the rotor in the radial direction and an inner circumferential portion thereof in the radial direction.

2. A rotating electric machine as claimed in claim 1, wherein the rotor is configured in such a manner that a triangular shaped cross sectioned space is defined by at least two (32-1) of the permanent magnets magnetized in the circumference direction of the rotating electric machine and at least one (32-2) of the permanent magnets magnetized in the radial direction thereof and arranged on the outer circumferential portion of the rotor, the permanent magnets of the rotor constituting the triangular shaped cross sectioned space being arranged in such a manner that the same magnetic poles are faced with each other in the triangular shaped cross sectioned space, and the stator comprises: a plurality of first stator elements (24-1) and a plurality of second stator elements (24-2), the rotor (23) being interposed in the axial direction between the first and second stator elements; and a plurality of third stator elements (24-3) opposed against the outer circumferential portion of the rotor in the radial direction.

3. A rotating electric machine as claimed in claim 1, wherein the rotor is configured in such a manner that a letter U shaped cross sectioned space having an opening in the outer circumferential portion of the rotor in the radial direction is defined by at least two (32-1) of the permanent magnets arranged in the radial direction and magnetized in the circumferential direction and at least one (32-2) of the permanent magnets arranged on the inner circumferential portion of the rotor and magnetized in the radial direction, the permanent magnets of the rotor constituting the letter U shaped cross sectioned space being arranged in such a manner that the same magnetic poles are faced with each other in the letter U shaped cross sectioned space, and the stator comprises a plurality of first stator elements (24-1) and a plurality of second stator elements (24-2), the rotor being interposed in the axial direction between the first and second stator elements (24-1, 24-2) and the stator further comprises a plurality of third stator elements (24-3) opposed against at least one of the outer and inner circumferential portions of the rotor in the radial direction.

4. A rotating electric machine as claimed in claim 1, wherein the rotor is configured in such a manner that a letter U shaped cross sectioned space having an opening in the inner circumferential portion is defined by at least two (32-1) of the permanent magnets arranged in the radial direction of the rotor and magnetized in the circumferential direction and at least one (32-2) of the permanent magnets arranged on the inner circumferential portion of the rotor and magnetized in the radial direction, the permanent magnets of the rotor constituting the letter U shaped cross sectioned space being arranged in such a manner that the same magnetic poles are faced with each other in the letter U shaped cross sectioned space, and the stator comprises a plurality of first stator elements and a plurality of second stator elements, the rotor being interposed in the axial direction between the first and second stator elements and the stator further comprises a plurality of third stator elements (24-3) opposed against at least one of the outer and inner circumferential portions of the rotor in the radial direction.

5. A rotating electric machine as claimed in claim 1, wherein the rotor is configured in such a manner that a square shaped cross sectioned space is defined by at least two (32-1) of the permanent magnets arranged in the radial direction of the rotor and magnetized in the circumferential direction and at least two (32-2) of the permanent magnets arranged on the inner and outer circumferential portions and magnetized in the radial direction, the permanent magnets of the rotor constituting the letter U shaped cross sectioned space being arranged in such a manner that the same magnetic poles are faced with each other in the square shaped cross sectioned space, and the stator comprises a plurality of second stator elements (24-2) arranged in the axial direction and the stator further comprises a plurality of third stator elements (24-3) opposed against at least one of the outer and inner circumferential portions of the rotor in the radial direction.

6. A rotating electrical machine as claimed in claim 3, wherein the third stator elements (24-3) are opposed against the outer circumferential portion of the rotor in the radial direction.

7. A rotating electrical machine as claimed in claim 4, wherein the third stator elements (24-3) are opposed against the inner circumferential portion of the rotor in the radial direction.

8. A rotating electrical machine as claimed in claim 5, wherein the third stator elements (24-3) are opposed against both of the first and second circumferential portions of the rotor in the radial direction.

9. A rotating electrical machine as claimed in claim 1, wherein the plurality of the stator elements and the other stator elements are integrated with one another via a stator yoke (25).

10. A method applicable to a rotating electric machine comprising:
providing a rotor (23) arranged in an axial direction of the rotating electric machine and including a plurality of permanent magnets magnetized in a circumferential direction of the rotating electric machine with respect to a revolution axis thereof and magnetized in a radial direction of the rotating electric machine with respect to the revolution axis thereof; and
providing a stator(25) arranged in the axial direction of the rotating electric machine and including a plurality of stator elements (24-1, 24-2), each stator element being constituted by a stator coil (33) and a stator tooth (34) and being opposed against the rotor via an axial gap provided in the axial direction of the rotating electric machine, the stator further including other stator elements (24-3) arranged to be opposed against at least one of an outer circumferential portion of the rotor in the radial direction and an inner circumferential portion thereof in the radial direction.
